Europäisches Patentamt

European Patent Office

Office européen des brevets

(11) Veröffentlichungsnummer: **0 353 774**

**A2**

## (12) EUROPÄISCHE PATENTANMELDUNG

(21) Anmeldenummer: 89114475.0

(22) Anmeldetag: 04.08.89

(51) Int. Cl.⁴: **A21C 3/06 , A21C 9/00**

(30) Priorität: 05.08.88 DE 3826747

(43) Veröffentlichungstag der Anmeldung:
07.02.90 Patentblatt 90/06

(84) Benannte Vertragsstaaten:
**AT BE DE ES FR GB IT LU NL**

(71) Anmelder: **Grubelnik Maschinenbau für Bäckereitechnik GmbH**
**Am Werbering 2a**
**D-8011 Kirchheim/Heimstetten(DE)**

(72) Erfinder: **Grubelnik, Hans**
**Waldschulstrasse 44**
**D-8000 München 82(DE)**

(74) Vertreter: **Zinnecker, Armin, Dipl.-Ing. et al**
**Rechtsanwälte Eduard Lorenz - Bernhard**
**Seidler Margrit Seidler - Dipl.-Ing. Hans-K.**
**Gossel Dr. Ina Philipps - Dr. Paul B.**
**Schäuble Dr. Siegfried Jackermeier**
**Dipl.-Ing. Armin Zinnecker**
**Widenmayerstrasse 23 D-8000 München**
**22(DE)**

(54) **Hörnchenwickelstation für eine Brötchenherstellungsanlage.**

(57) Eine Hörnchenwickelstation für eine Brötchenherstellungsanlage zur Herstellung von Brötchen verschiedener Sorten besitzt ein Gestell (11, 6) und eine Hörnchenwickelmaschine (2). Damit eine Hörnchenwickelmaschine in eine Brötchenherstellungsanlage zur Herstellung von Brötchen verschiedener Sorten integriert werden kann, ist die Hörnchenwickelmaschine (2) auf einem relativ zum Gestell (11, 6) verstellbaren Rahmen (12) angeordnet und ist auf dem verstellbaren Rahmen (12) ein Überbrückungsband (5) vorgesehen, wobei die Rahmenverstellung vorzugsweise durch Spindeln (6c) und Spindelmuttern (6d) erfolgt.

FIG. 1

## Hörnchenwickelstation für eine Brötchenherstellungsanlage

Die Erfindung betrifft eine Hörnchenwickelstation für eine Brötchenherstellunganlage zur Herstellung von Brötchen verschiedener Sorten mit einem Gestell und einer Hörnchenwickelmaschine.

Hörnchenwickelmaschinen sind an sich vorbekannt. Auf diesen Hörnchenwickelmaschinen werden beispielsweise Kornspitz, Käsestangen, Salzstangen, Mohnstangen oder Hörnchen hergestellt. Die Teigstücke wurden bisher von Hand in die Hörnchenwickelmaschine eingegeben oder durch eine Queraustragung vom Gärschrank der Anlage zugeführt. Bisher wurden in diesem Fall die Teigstücke einreihig zugeführt. Für größere Leistungen war es bisher erforderlich, eine oder mehrere Verteilerstationen vorzusehen. Dies erfordert einen großen Platzbedarf und erheblichen apparativen Aufwand. Darüber hinaus mußten die Teigstücke von Hand befeuchtet, bestreut oder sonst bearbeitet werden und von Hand auf Backbleche abgesetzt werden.

Aufgabe der Erfindung ist es, eine Hörnchenwickelmaschine in eine Brötchenherstellungsanlage zur Herstellung von Brötchen verschiedener Sorten zu integrieren.

Erfindungsgemäß wird diese Aufgabe durch die kennzeichnenden Merkmale des Anspruchs 1 dadurch gelöst, daß die Hörnchenwickelmaschine auf einem relativ zum Gestell verstellbaren Rahmen angeordnet ist und daß auf dem verstellbaren Rahmen ein Überbrückungsband vorgesehen ist. Wenn mit der Brötchenherstellungsanlage eine Brötchensorte hergestellt werden soll, die einen Arbeitsgang der Hörnchenwickelmaschine erfordert, wird der Rahmen mit der Hörnchenwickelmaschine in diejenige Position gebracht, in der die Hörnchenwickelmaschine in den Materialfluß der Brötchenherstellungsanlage einbezogen bzw. integriert ist. Die Teigstücke werden dann der Hörnchenwickelmaschine zugeführt und von dieser wieder an die Brötchenherstellungsanlage abgegeben. Wenn eine Brötchensorte hergestellt werden soll, bei der keine Bearbeitung durch die Hörnchenwickelmaschine erforderlich ist, wird der verstellbare Rahmen mit der Hörnchenwickelmaschine in diejenige Position gebracht, in der das Überbrückungsband wirksam wird. Die Teigstücke werden dann dem Überbrückungsband zugeführt und von diesem lediglich weitertransportiert, also anschließend wieder der Brötchenherstellungsanlage zugeführt, ohne daß eine Bearbeitung durch die Hörnchenwickelmaschine stattfindet. Es ist also möglich, in einer Brötchenherstellungsanlage sowohl solche Brötchensorten herzustellen, bei denen die Teigstücke eine Hörnchenwickelmaschine durchlaufen müssen, als auch solche Brötchensorten, bei denen dies nicht der Fall ist. Durch die neue Hörnchenwickelstation werden sämtliche Vorteile einer Brötchenherstellungsanlage zur Herstellung von Brötchen verschiedener Sorten genutzt bzw. aufrechterhalten, also: Die Befeuchtung und Bestreuung der Teigstücke, das Schneiden in verschiedenen Winkeln und das Absetzen der Teigstücke auf einem Backblech. Es ist also möglich, sämtliche Sorten von Teigstücken vollautomatisch herzustellen, ohne daß an irgendeiner Stelle noch ein Handgriff einer Bedienungsperson erforderlich wäre.

Durch die Erfindung wird erstmals eine Hörnchenwickelmaschine in eine Brötchenherstellungsanlage integriert. Bisher konnte dies nur über seitliche Ausführungen erreicht werden. Durch die neue Hörnchenwickelstation wird erstmals die volle Produktion über die Hörnchenwickelmaschine geführt bzw. laufengelassen; bisher wurde nur eine Teilmenge der Teigstücke durch die Hörnchenwickelmaschine verarbeitet. Es ist erstmals möglich, die Teigstücke zu befeuchten, zu bestreuen, zu bemehlen, zu schneiden (in Querrichtung und/oder in Längsrichtung) und auf Bleche abzusetzen und/oder in einem Nachgärschrank nachzugären.

Damit die Hörnchenwickelmaschine in die Gesamtanlage, also in die Brötchenherstellungsanlage zur Herstellung von Brötchen verschiedener Sorten, integriert werden kann, muß eine Möglichkeit vorgesehen sein, die es gestattet, die Hörnchenwickelmaschine bei Bedarf in den Materialfluß einzuführen oder aus dem Materialfluß herauszunehmen, also zu überbrücken. Zu diesem Zweck dient die Verstellbarkeit der Hörnchenwickelmaschine, also die Anordnung der Hörnchenwickelmaschine auf einem relativ zum Gestell verstellbaren Rahmen. Hierdurch kann die Hörnchenwickelmaschine verstellt, also aus dem Materialfluß herausgenommen und wieder in den Materialfluß eingeführt werden. An die Stelle der Hörnchenwickelmaschine kann das Überbrückungsband treten, welches die Teigstücke bei Bedarf ohne Bearbeitung weiterfördert.

Vorzugsweise ist der die Hörnchenwickelmaschine und das Überbrückungsband tragende Rahmen höhenverstellbar, also hochfahrbar und absenkbar.

Nach einer vorteilhaften Weiterbildung ist das Überbrückungsband unter der Hörnchenwickelmaschine angeordnet. Im abgesenkten Zustand des Rahmens werden die Teigstücke der Hörnchenwickelmaschine zugeführt; sie werden von dieser dann wieder an die Brötchenherstellungsanlage weitergegeben. Im abgesenkten Zustand ist die Hörnchenwickelmaschine also in die Brötchenherstellungsanlage bzw. in deren Materialfluß integriert.

Im hochgefahrenen Zustand des Rahmens wird das Überbrückungsband an die Stelle der Hörnchenwickelmaschine gebracht, so daß diese durch das Überbrückungsband überbrückt wird. Eine Bearbeitung der Teigstücke durch die Hörnchenwickelmaschine findet nicht statt, da die Teigstücke durch das Überbrückungsband lediglich ohne Bearbeitung weitergefördert werden.

Eine weitere vorteilhafte Weiterbildung ist dadurch gekennzeichnet, daß das Überbrückungsband nicht unter, sondern über der Hörnchenwickelmaschine angeordnet ist. Im hochgefahrenen Zustand des Rahmens werden die Teigstücke der Hörnchenwickelmaschine zugeführt; sie werden von dieser dann wieder an die Brötchenherstellungsanlage weitergegeben. Im hochgefahrenen Zustand ist die Hörnchenwickelmaschine also in die Brötchenherstellungsanlage bzw. in deren Materialfluß integriert. Im abgesenkten Zustand des Rahmens wird das Überbrückungsband an die Stelle der Hörnchenwickelmaschine gebracht. In diesem Zustand wird die Hörnchenwickelmaschine also durch das Überbrückungsband überbrückt. Eine Bearbeitung der Teigstücke durch die Hörnchenwickelmaschine findet nicht statt, da die Teigstücke durch das Überbrückungsband lediglich ohne Bearbeitung weitergefördert werden.

Eine vorteilhafte Weiterbildung ist dadurch gekennzeichnet, daß das Überbrückungsband um eine horizontale Achse schwenkbar ist. Die horizontale Schwenkachse ist vorzugsweise in Förderrichtung vorne angeordnet. An sich würde es ausreichen, daß das Überbrückungsband auf dem verstellbaren Rahmen fest angeordnet ist bzw. auf dem hochfahrbaren und absenkbaren Rahmen oben waagerecht verlaufend vorhanden ist. In diesem Fall können sich jedoch Schwierigkeiten ergeben, wenn auf die Hörnchenwickelmaschine zugegriffen werden soll. Dies kann erforderlich werden, wenn durch eine Sichtprüfung festgestellt werden soll, ob die Hörnchenwickelmaschine einwandfrei arbeitet. Weiterhin kann es erforderlich werden, die Hörnchenwickelmaschine auf die verschiedenen Größen und Arten des jeweils herzustellenden Gebäcks einzustellen bzw. umzustellen. Auch ist es wünschenswert, den Zugang zum Mehler der Hörnchenwickelmaschine zu gewährleisten, um Mehl nachfüllen zu können. Zu diesem Zweck ist das Überbrückungsband um eine horizontale Achse schwenkbar gelagert, wobei sich die Schwenkachse vorzugsweise in Förderrichtung vorne, also auf der Zuführungsseite des Überbrückungsbandes, befindet. Das Überbrückungsband führt also zwei Bewegungen aus: Zum einen wird es zusammen mit dem Rahmen verstellt bzw. hochgefahren und abgesenkt. Zum anderen wird es um die Schwenkachse weggeschwenkt, um den Zugang zu der Hörnchenwickelmaschine zu gewährleisten, um also ausreichend Platz zu schaffen, um die Mehlstreuer zu befüllen oder ähnliche Arbeiten an der Hörnchenwickelmaschine vorzunehmen. Wenn der Rahmen hochgefahren ist, wenn sich also die Hörnchenwickelmaschine in Arbeitsposition befindet, ist das Überbrückungsband nach oben weggeschwenkt, so daß die Zugangsmöglichkeit zur Hörnchenwickelmaschine besteht. Wenn der Rahmen abgesenkt ist, wenn sich also das Überbrückungsband in Arbeitsposition befindet, ist dieses Überbrückungsband nicht weggeschwenkt; es verläuft also in horizontaler Richtung, so daß die Teigstücke von dem Überbrückungsband von der Brötchenherstellungsanlage aufgenommen und wieder an diese Brötchenherstellungsanlage abgegeben werden.

Vorzugsweise ist an dem der Schwenkachse gegenüberliegenden Ende des Überbrückungsbandes ein Zugseil befestigt, dessen anderes Ende vorzugsweise an dem Rahmen befestigt ist. Das Zugseil kann über eine an dem Gestell angebrachte Rolle und/oder über eine an dem Rahmen angebrachte Rolle und/oder über weitere, an dem Gestell angebrachte Rollen geführt sein. Durch die Befestigung und Führung des Zugseils wird bewirkt, daß das Überbrückungsband im hochgefahrenen Zustand des Rahmens nach oben weggeschwenkt ist und daß das Überbrückungsband in abgesenkten Zustand des Rahmens horizontal verläuft, also in den Mater ialfluß der Brötchenherstellungsanlage integriert ist.

Die Rahmenverstellung bzw. Hochfahrbarkeit und Absenkbarkeit des Rahmens erfolgt vorzugsweise durch Spindeln und Spindelmuttern.

Am Ausgang der Hörnchenwickelmaschine kann ein schräg nach oben verlaufendes Förderband vorgesehen sein, dessen Ende in oder über dem Niveau des Eingangs der Hörnchenwickelmaschine liegt. Das Förderband kann Förderstege aufweisen, die vorzugsweise gleich beabstandet sind. In der an sich bekannten Hörnchenwickelmaschine laufen die Teigstücke während des Rollvorganges nach unten. Dies ist durch die Arbeitsweise der vorbekannten Hörnchenwickelmaschine vorgegeben. Die Teigstücke verlassen die Hörnchenwickelmaschine also an einem Punkt, der tiefer liegt als der Zuführungspunkt. Es ist daher wünschenswert, daß die Teigstücke vom Ausgang der Hörnchenwickelmaschine wieder angehoben werden, so daß sie wieder das Niveau des Eingangs der Hörnchenwickelmaschine erreichen. Hierdurch wird sichergestellt, daß die Hörnchenwickelstation im Ergebnis horizontal durchlaufen wird. Es ist dann möglich, daß das Zuführband zu der Hörnchenwickelstation genauso hoch liegt wie das Abführband von der Hörnchenwickelstation, also das auf die Hörnchenwickelstation folgende Band der Brötchenherstellungsanlage. Hierdurch wird es letztlich auch ermöglicht, daß das Überbrückungsband horizontal verläuft. Um die Teigstücke vom Ausgang der Hörnchenwickelmaschine anzuheben, also nach oben zu transportieren, ist das schräg nach oben verlaufende Förderband vorgesehen. Es endet vorzugsweise über dem Niveau des Eingangs der Hörnchenwickelmaschine, so daß die Teigstücke vom Ende des schräg nach oben verlaufenden Förderbandes auf das nachfolgende Förderband in der Brötchenherstellungsanlage herabfallen.

Damit die von der Hörnchenwickelmaschine gewickelten Hörnchen auf dem schräg nach oben aufwärts verlaufenden Förderband zuverlässig transportiert werden und insbesondere nicht herabrollen können, sind Mitnehmer vorhanden, die als Förderstege ausgebildet sein können, wobei diese Förderstege vorzugsweise gleichen Abstand aufweisen.

Das schräg nach oben verlaufende Förderband kann an seinem unteren Ende schwenkbar gelagert sein. Vorzugsweise ist die Schwenkbewegung des Förderbandes derart gesteuert daß es in der Arbeitsstellung der Hörnchenwickelmaschine flacher verläuft als in der Arbeitsstellung des Überbrückungsbandes. Die Schwenkbewegung des Förderbandes kann durch eine Kulisse gesteuert sein. Wenn der die Hörnchenwickelmaschine und das Überbrückungsband tragende Rahmen abgesenkt ist, verläuft das Förderband steiler. Hierdurch kann das Förderband bei der Bewegung des Rahmens nach oben nicht an das nachfolgende Band der Brötchenherstellungsanlage anstoßen. Sobald das obere Ende des Förderbandes das vordere Ende des nachfolgenden Bandes der Brötchenherstellungsanlage passiert hat, beginnt die Schwenkbewegung des Förderbandes in die flachere Position. Durch diese Schwenkbewegung des Förderbandes gelangt dann das obere Ende dieses Förderbandes über das vordere Ende des anschließenden Bandes der Brötchenherstellungsanlage. Die Teigstücke fallen also auf das vordere Ende des nachfolgenden Bandes; sie werden von diesem nachfolgenden Band zuverlässig aufgenommen und weitertransportiert. Die Schwenkbewegung des schräg nach oben verlaufenden Förderbandes wird durch die Kulissensteuerung zuverlässig und richtig durchgeführt; eine Fehlbedienung ist also ausgeschlossen. Das Förderband wird durch die Kulissensteuerung beim Hochfahren der Hörnchenwickelmaschine, also bei der Bewegung des Rahmens in die Arbeitsposition der Hörnchenwickelmaschine, automatisch in die richtige Stellung gebracht, so daß dann die Teigstücke vom Förderband richtig auf das nachfolgende Band der Brötchenherstellungsanlage übergeben werden können.

Vorzugsweise ist die Geschwindigkeit des schräg nach oben verlaufenden Förderbandes mit der Brötchenherstellungsanlage synchronisiert.

Hierdurch werden die Hörnchen auf dem Förderband im Takt synchronisiert weitertransportiert. Die Synchronisation kann auf elektronischem Weg durch ein Relais erfolgen. Die Referenzgeschwindigkeit wird dabei von einer Scheibe an der Brötchenherstellungsanlage abgenommen. Der Antrieb der Hörnchenwickelmaschine und des Förderbandes ist derart ausgelegt, daß die Drehzahl etwas höher als erforderlich ist. Der Motor wird dann derart abgebremst, daß stets die richtige Synchronisation aufrechterhalten bleibt.

Vorzugsweise ist die Hörnchenwickelmaschine derart geneigt angeordnet, daß ihre Eingangsseite im wesentlichen auf derselben Höhe liegt wie ihre Ausgangsseite. Diese Ausgestaltung ist besonders dann von Vorteil, wenn das Überbrückungsband unter der Hörnchenwickelmaschine angeordnet ist. Im abgesenkten Zustand des Rahmens werden dann die Teigstücke der Hörnchenwickelmaschine zugeführt. Sie verlassen die Hörnchenwickelmaschine auf derselben Höhe, müssen also nicht nach oben gefördert werden.

Vorzugsweise sind auf dem Rahmen mehrere Hörnchenwickelmaschinen nebeneinander angeordnet. Bisher bekannte Hörnchenwickelmaschinen verarbeiten etwa 2500 Teigstücke pro Stunde. Wenn eine derartige Hörnchenwickelmaschine in den Materialfluß einer Brötchenherstellungsanlage integriert werden soll, deren Kapazität größer ist also diejenige der Hörnchenwickelmaschine, ist es erforderlich, mehrere Hörnchenwickelmaschinen nebeneinander anzuordnen. Eine Brötchenherstellungsanlage kann möglicherweise 10.000 Teigstücke pro Stunde verarbeiten. In diesem Fall müssen 4 Hörnchenwickelmaschinen mit einer Kapazität von 2500 Teigstücken pro Stunde nebeneinander vorgesehen werden.

Ein Ausführungsbeispiel der Erfindung wird nachstehend anhand der beigefügten Zeichnung im einzelnen erläutert. In der Zeichnung zeigt

Fig. 1 die Hörnchenwickelstation in einer Seitenansicht, wobei die Hörnchenwickelmaschine abgesenkt ist,

Fig. 2 die in Fig. 1 gezeigte Hörnchenwickelstation mit hochgefahrener Hörnchenwickelmaschine,

Fig. 3 die in Fig. 1 dargestellte Hörnchenwickelstation in einer Ansicht von oben,

Fig. 4 einb weiteres Ausführungsbeispiel einer Hörnchenwickelstation in einer Seitenansicht, wobei das Überbrückungsband unter der Hörnchenwickelmaschine angeordnet ist und wobei der Rahmen abgesenkt ist, und

Fig. 5 die in Fig. 4 dargestellte Hörnchenwickelstation mit hochgefahrenem Rahmen.

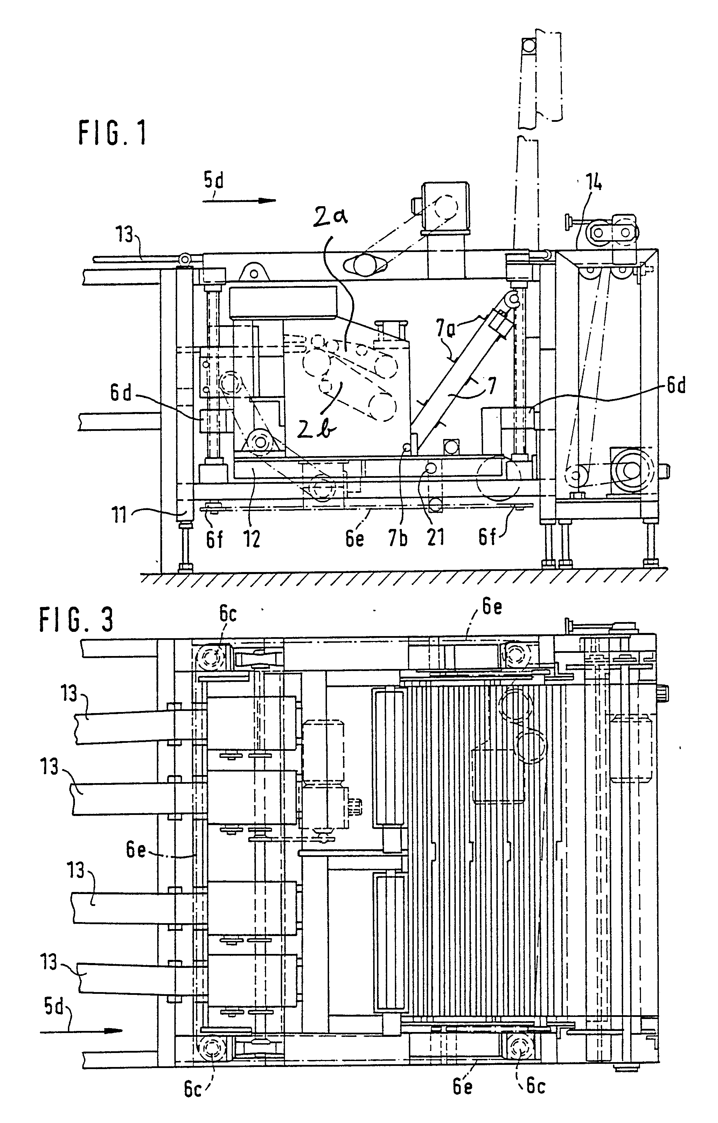

Die in Fig. 1 gezeigte Hörnchenwickelstation besitzt ein Gestell 11, in dem ein Rahmen 12 höhenverstellbar, also hochfahrbar und absenkbar gelagert ist. Auf dem Rahmen 12 ist die Hörnchenwickelmaschine 2 angeordnet, die obere Wickelkörbe 2a und untere Wickelkörbe 2b aufweist. Die Teigstücke werden der Hörnchenwickelstation durch ein Zuführband 13, das Bestandteil der Brötchenherstellungsanlage zur Herstellung von Brötchen verschiedener Sorten ist, zugeführt. Der Abtransport von der Hörnchenwickelstation erfolgt durch ein Abführband 14, das ebenfalls Bestandteil der Brötchenherstellungsanlage zur Herstellung von Brötchen verschiedener Sorten ist. Auf dem Rahmen 12 ist über der Hörnchenwickelmaschine 2 ein Überbrückungsband 5 angeordnet. Das Überbrückungsband 5 verläuft in der in Fig. 1 gezeigten Stellung des Rahmens 12 in horizontaler Richtung; es verbindet das hintere Ende des Zuführbandes 13 mit dem vorderen Ende des Abführbandes 14. Das hintere Ende des Zuführbandes 13 und das vordere Ende des Abführbandes 14 liegen in gleicher Höhe, so daß das Überbrückungsband 5 horizontal verlaufen kann.

Die Rahmenverstellung erfolgt durch vier im Rechteck angeordnete, vertikale Spindeln 6c, die in dem Gestell 11 axial unverschieblich und drehbar gelagert sind. In die Spindeln 6c greifen Spindelmuttern 6d ein, die mit dem Rahmen 12 verbunden sind. Die Spindeln 6c sind durch einen um sämtliche Spindeln 6c laufenden Kettentrieb 6e und durch mit den Spindeln 6c koaxiale Zahnräder 6f in ihren Drehbewegungen synchronisiert, um ein Verkanten des Rahmens 12 bzw. der Spindelmuttern 6d auszuschließen.

Am Ausgang der Hörnchenwickelmaschine 2 (in den Figuren rechts dargestellt) ist ein schräg nach oben verlaufendes Förderband (Schrägaufzug) 7 vorgesehen. Das linke, untere Ende des Förderbandes 7 liegt unterhalb des Ausgangs der Hörnchenwickelmaschine 2. Das rechte, obere Ende des Förderbandes 7 liegt links vom vorderen, linken Ende des Abführbandes 14. Das Förderband 7 weist gleichbeabstandete Förderstege 7a auf. Das Förderband 7 ist an seinem unteren Ende um die horizontale Achse 7b schwenkbar gelagert.

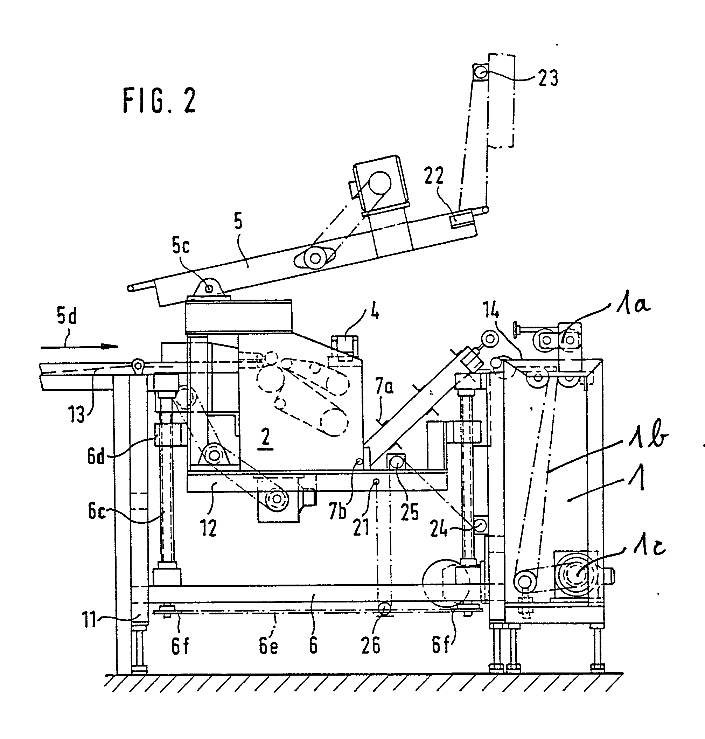

In der in Fig. 1 gezeigten, abgesenkten Stellung des Rahmens 12 befindet sich das Überbrückungsband 5 in Eingriff und die Hörnchenwickelmaschine 2 außer Eingriff. In der in Fig. 2 gezeigten, hochgefahrenen Stellung befindet sich die Hörnchenwickelmaschine 2 in Eingriff und das Überbrückungsband 5 außer Eingriff. Das Überbrückungsband 5 ist um eine horizontale Achse 5c schwenkbar gelagert. Die horizontale Schwenkachse 5c ist in Förderrichtung 5d vorne angeordnet. An dem der Schwenkachse 5c gegenüberliegenden, hinteren Ende des Überbrückungsbandes 5 ist ein Zugseil 5b befestigt. Das andere Ende des Zugseils 5b ist an dem Punkt 21 an dem Rahmen 12 befestigt. Das Zugseil 5b ist, ausgehend vom Befestigungspunkt 22 am Überbrückungsband 5, über die Rollen 23, 24, 25 und 26 geführt. Die Rollen 23, 24 und 26 sind mit dem Gestell 11, 6 verbunden, während die Rolle 25 mit dem Rahmen 12 verbunden ist. Die gestellfeste Rolle 23 befindet sich über dem Befestigungspunkt 22 des Zugseils 5b an dem Überbrückungsband 5. Die gestellfeste Rolle 26 liegt unter dem Befestigungspunkt 21 des Zugseils 5b an dem Rahmen 12. Die rahmenfeste Rolle 25 liegt in der Nähe des Befestigungspunktes 21. Die gestellfeste Rolle 24 liegt unter der gestellfesten Rolle 23; sie liegt weiterhin etwa auf der Höhe der rahmenfesten Rolle 25, wenn sich der Rahmen 12 im abgesenkten, in Fig. 1 gezeigten Zustand befindet. Die gesamte Anordnung des Zugseils 5b, der Befestigungspunkte 21, 22 und der Rollen 23, 24, 25, 26 ist derart getroffen, daß sich das rechte, der Schwenkachse 5c gegenüberliegende Ende des Überbrückungsbandes 5 nach oben bewegt, wenn der Rahmen 12 aus seiner in Fig. 1 gezeigten, unteren Stellung in die in Fig. 2 gezeigt, obere Stellung verfahren wird. Durch diese Bewegung des rechten Endes des Überbrückungsbandes 5 nach oben wird das Überbrückungsband 5 also um die Schwenkachse 5c nach oben verschenkt. Hierdurch wird der Abstand zwischen dem rechten Ende des Überbrückungsbandes 5 und dem vorderen Ende des Abführbandes 14 vergrößert, so daß der Zugang zu der Hörnchenwickelmaschine 2 ebenfalls vergrößert, also erleichtert wird. Der Mehler 4 wird dadurch leichter zugänglich, wenn sich die Hörnchenwickelmaschine 2 in Eingriffstellung (Fig. 2) befindet.

Wenn der Rahmen 12 aus der in Fig. 1 gezeigten Stellung in die in Fig. 2 gezeigte Stellung überführt wird, verlängern sich jeweils die Strecken des Zugseils 5b zwischen dem Befestigungs punkt 21 und der Rolle 26, zwischen der Rolle 26 und der Rolle 25 und zwischen der Rolle 25 und der Rolle 24. Die Strecke zwischen den Rollen 25 und 24 verlängert sich deshalb, weil diese beiden Rollen im abgesenkten Zustand des Rahmens 12 etwa auf gleicher Höhe liegen, so daß dann ein verhältnismäßig kurzer Abstand zwischen diesen Rollen 25 und 26 besteht. Wenn der Rahmen 12 hochgefahren wird, vergrößert sich also die Seilstrecke zwischen den Rollen 25 und 24. Durch das Hochfahren des Rahmens 12 verkürzt sich die Seilstrecke zwischen dem Befestigungspunkt 22 und der Rolle 23. Durch die oben beschriebenen Seilverlängerungen wird diese Verkürzung jedoch überkompensiert, so daß sich ingesamt das rechte Ende des Überbrückungsbandes 5 relativ zu dessen linkem Ende hebt, obwohl das Überbrückungsband 5 zusammen mit dem Rahmen 12 hochgefahren worden ist. Es findet also eine Relativverschwenkung des Überbrückungsbandes 5 um die Schwenkachse 5c statt, die den Abstand des rechten Endes des Überbrückungsbandes 5 von dem linken Ende des Abführbandes 14 über dasjenige Maß hinaus vergrößert welches ohnehin durch die Aufwärtsbewegung des Rahmens 12 erzeugt wird.

In der in Fig. 1 gezeigten Stellung durchlaufen die Teigstücke das Überbrückungsband 5. Die Hörnchenwickelmaschine 2 wird also durch das Überbrückungsband 5 überbrückt. In der in Fig. 2 gezeigten, hochgefahrenen Stellung des Rahmens 12 durchlaufen die Teigstücke die Hörnchenwickelmaschine 2. Das Überbrückungsband 5 ist nach oben gefahren und zusätzlich mit seinem hinteren Ende nach oben weggeschwenkt.

In der Fig. 2 ist das schräg nach oben laufende Förderband 7 gegenüber der in Fig. 1 gezeigten Stellung um die horizontale Schwenkachse 7b abwärts, also im Uhrzeigersinn verschwenkt worden, so daß es in der Fig. 2 flacher verläuft. Hierdurch gelangt das rechte, obere Ende des Förderbandes 7 über das vordere Ende des Abförderbandes 14. Die vom Förderband 7 nach oben geförderten Teigstücke fallen also zuverlässig auf das Abförderband 14. Die Schwenkbewegung des Förderbandes 7 um die horizontale Schwenkachse 7b ist derart durch eine Kulisse gesteuert, daß das rechte, obere Ende des Förderbandes 7 bei der Aufwärtsbewegung des Rahmens 12 nicht an das vordere Ende des Abförderbandes 14 anstößt. Erst wenn das rechte, obere Ende des Förderbandes 7 das vordere Ende des Abförderbandes 14 passiert hat, wird das Förderband 7 in seine endgültige, in Fig. 2 gezeigte Stellung verschwenkt. Das Förderband 7 bzw. dessen rechtes, oberes Ende wird also zuverlässig an dem Abförderband 14 vorbeigeführt.

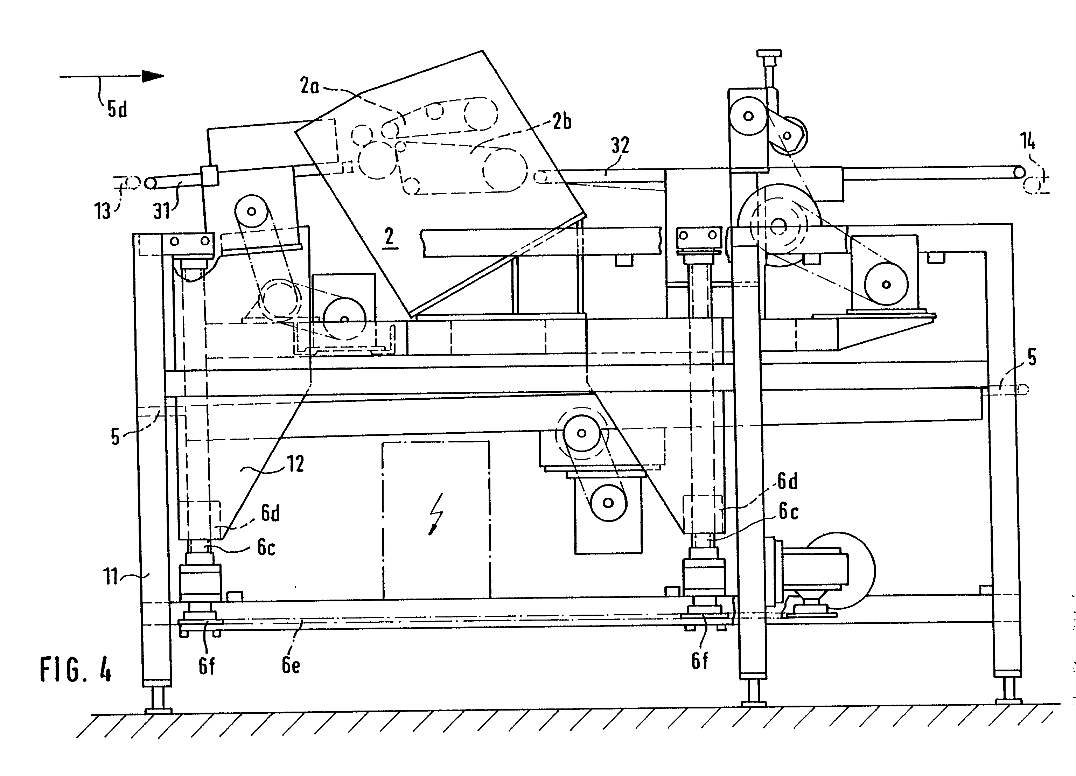

Wie aus Fig. 3 ersichtlich, sind insgesamt vier Zuführbänder 13 vorhanden. Auf dem Rahmen 12 schließen sich dementsprechend vier Zuführbänder 3 an, von denen die Teigstücke den Hörnchenwickelmaschinen zugeführt werden. Die Fig. 3 zeigt einen Schnitt durch die Station längs der Linie A-B-C-D in Fig. 2.

In der Fig. 2 ist rechts die Flachdrückeinrichtung dargestellt, die aus einem Gestell 1, einer Flachdrückwalze 1a, einem Band 1b und einem Motor 1c für das Band und die Flachdrückwalze besteht. In der Flachdrückstation werden die von der Hörnchenwickelmaschine gewickelten Hörnchen flachgedrückt bzw. angedrückt. Hierdurch erhalten die gewickelten Hörnchen für die weitere Verarbeitung, insbesondere das Befeuchten und Bestreuen, stets die richtige Schlußlage und die richtige Seitenlage; die Teigstücke können nicht verrollen.

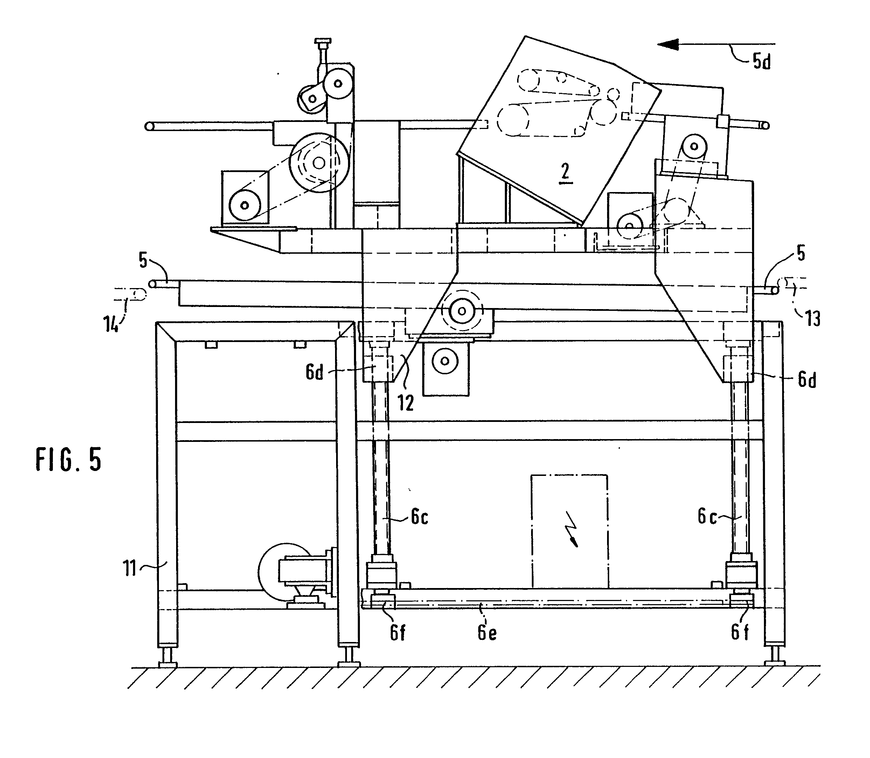

In den Fig. 4 und 5 ist ein anderes Ausführungsbeispiel einer Hörnchenwickelstation gezeigt, das sich von dem bisher beschriebenen Ausführungsbeispiel im wesentlichen dadurch unterscheidet, daß das Überbrückungsband 5 nicht über, sondern unter der Hörnchenwickelmaschine 2 angeordnet ist. Im Ausführungsbeispiel gemäß Fig. 4 und 5 sind entsprechende Teilen mit denselben Bezugszeichen bezeichnet, so daß sie nicht erneut im einzelnen beschrieben werden müssen.

Auf dem Rahmen 12 ist unter der Hörnchenwickelmaschine 2 ein Überbrückungsband 5 angeordnet. Das Überbrückungsband 5 verläuft in horizontaler Richtung. Es verbindet in der in Fig. 5 gezeigten, hochgefahrenen Stellung das hintere Ende des Zuführbandes 13 mit dem vorderen Ende des Abführbandes 14. Das hintere Ende des Zuführbandes 13 und das vordere Ende des Abführbandes 14 liegen in gleicher Höhe, so daß das Überbrückungsband 5 horizontal verlaufen kann. Das Überbrückungsband 5 ist relativ zum Rahmen 12 weder verschwenkbar noch sonst verstellbar. Hierdurch vereinfacht sich der Aufbau dieses Überbrückungsbandes 5 sowie dessen Antrieb.

In der in Fig. 4 gezeigten, abgesenkten Stellung des Rahmens 12 befindet sich die Hörnchenwickelmaschine 2 in Eingriff und das Überbrückungsband 5 außer Eingriff. In der in Fig. 5 gezeigten, hochgefahrenen Stellung befindet sich das Überbrückungsband 5 in Eingriff und die Hörnchenwickelmaschine 2 außer Eingriff. Der Pfeil 5d gibt die Bewegungsrichtung der Teigstücke an.

Wie aus den Fig. 4 und 5 ersichtlich, ist die Hörnchenwickelmaschine 2 derart geneigt angeordnet, daß ihre Eingangsseite (in Fig. 4 links dargestellt) im wesentlichen auf derselben Höhe liegt wie ihre Ausgangsseite (rechts in Fig. 4). Die Teigstücke müssen also nach dem Verlassen der Hörnchenwickelmaschine nicht angehoben werden. Sie werden der Hörnchenwickelmaschine 2 vom Zwischenförderband 31 zugeführt und nach Verlassen der Hörnchenwickelmaschine an das Zwischenförderband 32 abgegeben, von wo sie anschließend auf das Abförderband 14 gelangen.

## Ansprüche

1. Hörnchenwickelstation für eine Brötchenherstellungsanlage zur Herstellung von Brötchen verschiedener Sorten mit einem Gestell (11, 6) und einer Hörnchenwickelmaschine (2),
**dadurch gekennzeichnet,**
daß die Hörnchenwickelmaschine (2) auf einem relativ zum Gestell (11) verstellbaren Rahmen (12) angeordnet ist und daß auf dem verstellbaren Rahmen (12) ein Überbrückungsband (5) vorgesehen ist, wobei die Rahmenverstellung vorzugsweise durch Spindeln (6c) und Spindelmuttern (6d) erfolgt.

2. Hörnchenwickelstation nach Anspruch 1, dadurch gekennzeichnet, daß der Rahmen (12) höhenverstellbar also hochfahrbar und absenkbar ist.

3. Hörnchenwickelstation nach Anspruch 1 oder 2, dadurch gekennzeichnet, daß das Überbrückungsband (5) unter der Hörnchenwickelmaschine (2) angeordnet ist.

4. Hörnchenwickelstation nach Anspruch 1 oder 2, dadurch gekennzeichnet, daß das Überbrückungsband (5) über der Hörnchenwickelmaschine (2) angeordnet ist.

5. Hörnchenwickelstation nach Anspruch 4, dadurch gekennzeichnet, daß das Überbrückungsband (5) um eine horizontale Achse (5c) schwenkbar ist, die vorzugsweise in Förderrichtung (5d) vorne angeordnet ist.

6. Hörnchenwickelstation nach Anspruch 5, dadurch gekennzeichnet, daß an dem der Schwenkachse (5c) gegenüberliegenden Ende (22) des Überbrückungsbandes (5) ein Zugseil (5b) befestigt ist, dessen anderes Ende (21) vorzugsweise an dem Rahmen (12) befestigt ist.

7. Hörnchenwickelstation nach Anspruch 6, dadurch gekennzeichnet, daß das andere Ende (21) des Zugseiles (5b) über eine am Gestell (11, 6) angebrachte Rolle (26) und/oder über eine an dem Rahmen (12) angebrachte Rolle (25) und/oder über weitere, an dem Gestell (11, 6) angebrachte Rollen (24, 23) geführt ist.

8. Hörnchenwickelstation nach einem der Ansprüche 4 bis 7, dadurch gekennzeichnet, daß am Ausgang der Hörnchenwickelmaschine (2) ein schräg nach oben verlaufendes Förderband (7) vorgesehen ist, dessen Ende in oder über dem Niveau des Eingangs der Hörnchenwickelmaschine (2) liegt, welches vorzugsweise gleich beabstandete Förderstege (7a) aufweist und dessen Geschwindigkeit vorzugsweise mit der Brötchenherstellungsanlage synchronisiert ist.

9. Hörnchenwickelstation nach Anspruch 8, dadurch gekennzeichnet, daß das Förderband (7) an seinem unteren Ende um eine horizontale Achse (7b) schwenkbar gelagert ist, wobei die Schwenkbewegung des Förderbandes (7) vorzugsweise durch eine Kulisse vorzugsweise derart gesteuert ist, daß es in der Arbeitsstellung der Hörnchenwickelmaschine (2) flacher verläuft als in der Arbeitsstellung des Überbrückungsbandes (5).

10. Hörnchenwickelstation nach einem der vorhergehenden Ansprüche, dadurch gekennzeichnet, daß die Hörnchenwickel maschine (2) derart geneigt angeordnet ist, daß ihre Eingangsseite im wesentlichen auf derselben Höhe liegt wie ihre Ausgangsseite.

11. Hörnchenwickelstation nach einem der vorhergehenden Ansprüche, dadurch gekennzeichnet, daß auf dem Rahmen (12) mehrere Hörnchenwikkelmaschinen (2) nebeneinander angeordnet sind.

FIG. 1

FIG. 3

FIG. 2

FIG. 4

FIG. 5

EP 0 353 774 A2